# EUROPÄISCHE PATENTSCHRIFT

(11) **EP 1 800 048 B1**
(45) Veröffentlichungstag und Bekanntmachung des Hinweises auf die Patenterteilung: **11.02.2009**
(21) Anmeldenummer: 05776507.5
(22) Anmeldetag: 25.08.2005
(51) Int. Cl.: F16L 37/12, F16L 23/036, F28F 9/04, F01N 7/18

(54) **VORRICHTUNG ZUM VERBINDEN VON ROHRENDEN**
DEVICE FOR JOINING PIPE ENDS
DISPOSITIF PERMETTANT DE RELIER DES EXTREMITES DE TUYAUX

(30) Priorität: 06.10.2004 DE 102004048546
(43) Veröffentlichungstag der Anmeldung: 27.06.2007
(73) Patentinhaber: A. RAYMOND ET CIE, 38000 Grenoble (FR)
(72) Erfinder: BELLANTI, Bruno, F-38400 Saint Martin d'Hères (FR)
(74) Vertreter: Rüttgers, Joachim
(86) Internationale Anmeldenummer: PCT/EP2005/009192
(87) Internationale Veröffentlichungsnummer: WO 2006/037404

(56) Entgegenhaltungen:
- EP-A- 1 429 066
- DE-A1- 19 752 281
- DE-A1- 19 953 129
- US-A1- 2003 067 163

## Beschreibung

Die Erfindung betrifft eine Vorrichtung zum Verbinden von Rohrenden gemäß dem Oberbegriff des Patentanspruches 1.

Eine derartige Vorrichtung ist aus DE 197 52 281 A1 bekannt. Bei dieser vorbekannten Vorrichtung zum Verbinden von Rohrenden, die mit axial vorstehenden Verbindungsflanschen ausgebildet sind, sind ein erster Flügel und ein zweiter Flügel vorhanden, die über einen Verbindungssteg miteinander verbunden und zum Umgreifen der Verbindungsflansche in einem Eingriffsbereich ausgebildet sind. An einem Flügel ist ein Federarm angesetzt, der beim Umgreifen eine axiale Kraft auf die Verbindungsflansche ausübt. Weiterhin ist an dem Federarm ein sich in radialer Richtung erstreckender, höckerartiger Vorsprung ausgebildet, der bei Bedarf als Werkzeugeingriffsanordnung zum axialen Bewegen des Federarmes entgegen der axialen Kraft in einer von dem Eingriffsbereich wegweisenden Richtung mit einem Werkzeug in Eingriff bringbar ist. Allerdings ist der Zugang zu der Werkzeugeingriffsanordnung recht schwierig.

Eine weitere Vorrichtung zum Verbinden von Rohrenden ist aus der DE 199 53 129 A1 bekannt. Bei dieser vorbekannten, zum Verbinden von mit axial vorstehenden Verbindungsflanschen ausgebildeten Rohrenden vorgesehenen Vorrichtung sind ein erster Flügel und ein zweiter Flügel vorhanden, die über einen Verbindungssteg miteinander verbunden und zum Umgreifen der Verbindungsflansche in einem Eingriffsbereich ausgebildet sind. Zum Festlegen der Rohrenden sind an den axialen Randseiten der Flügel Klammerzungen ausgebildet, die Verbindungsflansche der Rohrenden hintergreifen. Als Stecksicherung und zur Führungshilfe sind in den Flügeln Längsschlitze vorhanden, die mit dem Rand eines Verbindungsflansches in Eingriff bringbar sind.

Der Erfindung liegt die Aufgabe zugrunde, eine Vorrichtung der eingangs genannten Art anzugeben, die mit der sich eine auch unter beengten Verhältnissen verhältnismäßig einfach lösbare Verbindung zwischen Rohrenden bewerkstelligen lässt.

Diese Aufgabe wird bei einer Vorrichtung der eingangs genannten Art mit den kennzeichnenden Merkmalen des Patentanspruches 1 gelöst.

Dadurch, dass bei der erfindungsgemäßen Vorrichtung die Werkzeugeingriffsanordnung eine rechtwinklig zu dem Federarm ausgerichtete, in axialer Richtung über den Federarm vorstehende Anlenkzunge aufweist, lässt sich der Federarm verhältnismäßig einfach durch ein unproblematisch durchführbares Ansetzen eines Werkzeuges an die in axialer Richtung vorstehende Anlenkzunge entgegen der axial wirkenden Federkraft bewegen und die Verbindung zwischen den Rohrenden lösen.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung und
- Fig. 2: in einer perspektivischen Ansicht das Ausführungsbeispiel gemäß Fig. 1 in einer um Rohrenden gelegten Anordnung.

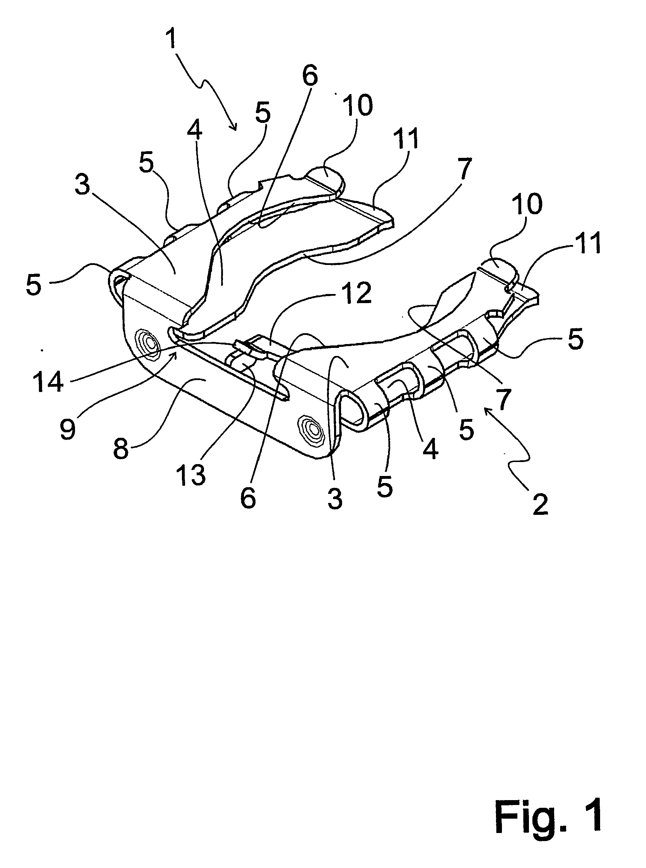

Fig. 1 zeigt in einer perspektivischen Ansicht ein aus einem gestanzten und gebogenen Blechteil hergestelltes Ausführungsbeispiel einer erfindungsgemäßen Vorrichtung. Die erfindungsgemäße Vorrichtung gemäß Fig. 1 verfügt über einen ersten Flügel 1 und einen zweiten Flügel 2, die einander gegenüberliegend angeordnet sind. Jeder Flügel 1, 2 verfügt über eine in der Darstellung gemäß Fig. 1 deckseitig angeordnete erste Platte 3 und eine bodenseitig angeordnete zweite Platte 4, die über eine Anzahl von zum Erzielen einer gewissen Biegsamkeit rundgebogenen und randseitig angeordneten Verbindungsbügel 5 in einem Abstand im wesentlichen parallel zueinander angeordnet sind.

Die gegenüberliegenden Platten 3, 4 weisen an ihren aufeinander zu weisenden Seiten abschnittsweise kreisbogenförmig ausgestaltete erste Randseiten 6 und zweite Randseiten 7 auf, wobei die Kreisbogenabschnitte der ersten Randseiten 6 und der zweiten Randseiten 7 unterschiedliche Radien aufweisen und radial gegeneinander versetzt angeordnet sind.

Die Flügel 1, 2 sind über einen flachen Verbindungssteg 8 miteinander verbunden, der randseitig an den ersten Platten 3 der Flügel 1, 2 angeformt ist. Der Verbindungssteg 8 weist in dem den ersten Platten 3 benachbarten Bereich eine Ausnehmung 9 auf, die an ihren Randseiten schlitzartig ausgebildet ist. An den dem Verbindungssteg 8 gegenüberliegenden freien Enden der Platten 3, 4 sind von der jeweils anderen Platte 3, 4 wegweisend abgewinkelte Randabschnitte 10, 11 vorhanden.

Weiterhin verfügt die erfindungsgemäße Vorrichtung über einen Federarm 12, der bei dem in Fig. 1 dargestellten Ausführungsbeispiel an der zweite Platte 4 des zweiten Flügels 2 angesetzt ist und sich in Verlängerung der zweiten Randseite 7 in etwa kreisbogenförmig bis in den Mittenbereich des Verbindungssteges 8 erstreckt. An dem freien Ende des Federarmes 12 sind zum einen eine rechtwinklig zu dem Federarm 12 ausgerichtete sowie radial nach außen überstehende Anlenkzunge 13 und zum anderen eine in Richtung der ersten Platten 1 beispielsweise mit einem Winkel von 45 Grad abgewinkelte, ebenfalls radial nach außen überstehende Aufgleitzunge 14 einer Werkzeugeingriffsanordnung angeformt. Zweckmäßigerweise ist auch der Federarm 12 in Richtung der ersten Platten 3 gebogen, so dass auch das freie Ende des Federarmes 12 über die Ebene der zweiten Platten 4 vorsteht.

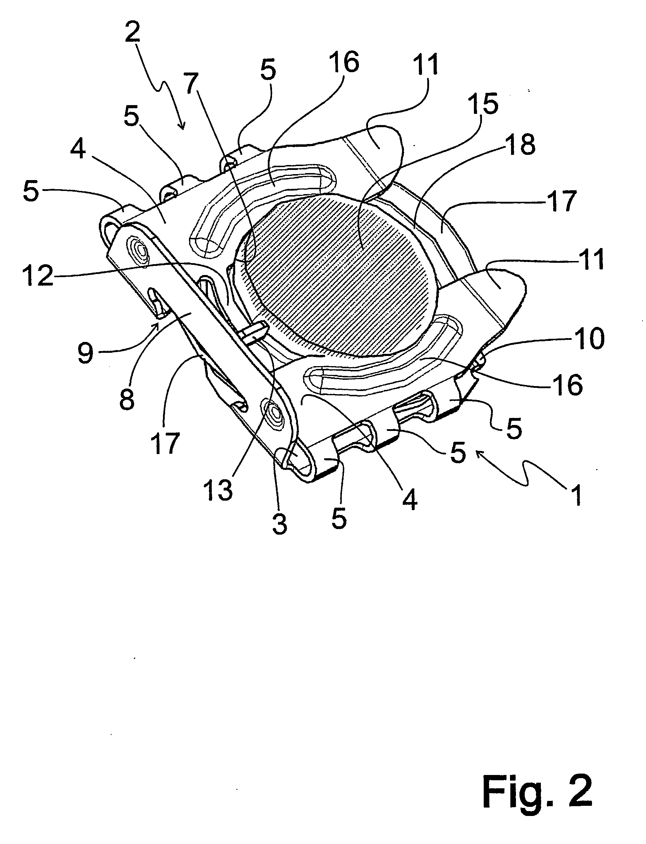

Fig. 2 zeigt in einer perspektivischen Ansicht das Ausführungsbeispiel gemäß Fig. 1 mit Blick auf die in der Darstellung gemäß Fig. 1 nicht sichtbare Seite der zweiten Platten 4 in einer in einem Eingriffsbereich um Rohrenden 15 gelegten Anordnung. Aus Fig. 2 ist ersichtlich, dass bei diesem Ausführungsbeispiel die zweiten Platten 4 mit in etwa kreisbogenförmig parallel zu den zweiten Randseiten 7 verlaufenden Sicken 16 ausgebildet sind, um die zweiten Platten 4 zu versteifen. Es versteht sich, diese Maßnahme auch bei den ersten Platten 3 zweckmäßigerweise vorgenommen ist, falls deren Steifigkeit erhöht werden soll.

Aus Fig. 2 ist ersichtlich, dass die Rohrenden 15 mit einem ersten Verbindungsflansch 17 und einem zweiten Verbindungsflansch 18 mit einem gegenüber dem Durchmesser des ersten Verbindungsflansches 17 kleineren Durchmesser ausgebildet sind, die in der Darstellung gemäß Fig. 2 von den Platten 3, 4 der Flügel 1, 2 umgriffen sind, wobei ein Randabschnitt des ersten Verbindungsflansches 17 in die Ausnehmung 9 des Verbindungssteges 8 eingreift. Zum Anordnen des dargestellten Ausführungsbeispieles wurde zuvor die erfindungsgemäße Vorrichtung mit den zur Einführhilfe trichterartig angestellten Randabschnitten 10, 11 an die Verbindungsflansche 17, 18 angelegt und durch Ausüben einer in radialer Richtung wirkenden Einschiebekraft auf den Verbindungssteg 8 unter anfänglichem Aufbiegen und sich anschließenden Schließen der Flügel 1, 2 sowie Aufgleiten der Aufgleitzunge 14 an dem ersten Verbindungsflansch 17 in einer Setzstellung positioniert.

Weiterhin ist Fig. 2 zu entnehmen, dass der Federarm 12 aufgrund der wenigstens durch die überstehende Aufgleitzunge 14, zweckmäßigerweise auch durch eine oben erwähnte Vorbiegung des Federarmes 12 selbst in axialer Richtung eine Kraft auf den zweiten Verbindungsflansch 18 ausübt, die zu der Haltekraft beiträgt, so dass dadurch neben der Wirkung der Platten 3, 4 die Verbindung zwischen den Rohrenden 15 verbessert und auch die Sicherung der erfindungsgemäßen Vorrichtung selbst gegen unbeabsichtigtes Lösen erhöht ist.

Zum beabsichtigten Lösen der erfindungsgemäßen Vorrichtung von den Rohrenden 15 wird bei dem dargestellten Ausführungsbeispiel als Werkzeug das Ende einer Klinge eines in den Figuren nicht dargestellten Schraubendrehers zwischen die Anlenkzunge 13 und die Aufgleitzunge 14 in einen dort ausgebildeten Einführschlitz eingesteckt sowie der Federarm 12 entgegen der durch ihn ausgeübten axialen Kraft in einer von dem Eingriffsbereich und damit den Verbindungsflanschen 17, 18 wegweisenden Richtung vorzugsweise durch Ausnutzen eines Hebeleffektes durch Anlegen der Klinge an dem dem Verbindungssteg 8 unmittelbar benachbarten Abschnitt der zweiten Randseite 7 der zweite Platte 4 des ersten Flügels 1 abgehoben, so dass die erfindungsgemäße Vorrichtung mit einer gegenüber der Haltekraft verringerten Abzugskraft nunmehr von den Rohrenden 15 abziehbar ist.

Dabei sei angemerkt, dass der Werkzeugansatz für das Abziehen der erfindungsgemäßen Vorrichtung grundsätzlich bei der Setzstellung erfolgen kann, so dass die erfindungsgemäße Vorrichtung auch unter beengten Platzverhältnissen eingesetzt werden kann, die ein von einer anderen Stelle als der Setzstellung ausgehendes Lösen nicht zulassen.

## Patentansprüche

1. Vorrichtung zum Verbinden von Rohrenden, die mit axial vorstehenden Verbindungsflanschen (17, 18) ausgebildet sind, mit einem ersten Flügel (1) und mit einem zweiten Flügel (2), die über einen Verbindungssteg (8) miteinander verbunden und zum Umgreifen der Verbindungsflansche (17, 18) in einem Eingriffsbereich ausgebildet sind, und mit einem an einem Flügel (1, 2) angesetzten Federarm (12), der beim Umgreifen eine axiale Kraft auf die Verbindungsflansche (17, 18) ausübt, wobei an dem Federarm (12) eine Werkzeugeingriffsanordnung ausgebildet ist, die zum axialen Bewegen des Federarmes (12) entgegen der axialen Kraft in einer von dem Eingriffsbereich wegweisenden Richtung mit einem Werkzeug in Eingriff bringbar ist, **dadurch gekennzeichnet, dass** die Werkzeugeingriffsanordnung eine rechtwinklig zu dem Federarm (12) ausgerichtete, in axialer Richtung über den Federarm (12) vorstehende Anlenkzunge (13) aufweist.

2. Vorrichtung nach Anspruch 1, **dadurch gekennzeichnet, dass** der Federarm (12) benachbart des Verbindungssteges (8) angeordnet ist.

3. Vorrichtung nach Anspruch 2, **dadurch gekennzeichnet, dass** der Federarm (12) mit einem Flügel (1, 2) in Verbindung steht.

4. Vorrichtung nach Anspruch 3, **dadurch gekennzeichnet, dass** sich der Federarm (12) in Richtung des weiteren Flügels (1, 2) erstreckt.

5. Vorrichtung nach einem der Ansprüche 1 bis 4, **dadurch gekennzeichnet, dass** an einem freien Ende des Federarmes (12) eine gegenüber dem Federarm (12) in radialer Richtung nach außen überstehende und in axialer Richtung nach innen geneigte Aufgleitzunge (14) vorhanden ist.

6. Vorrichtung nach einem der Ansprüche 1 bis 5, **dadurch gekennzeichnet, dass** die Anlenkzunge (13) radial rechtwinklig über den Federarm (12) vorsteht.

7. Vorrichtung nach Anspruch 5 und Anspruch 6, **dadurch gekennzeichnet, dass** zwischen der Anlenkzunge (13) und der Aufgleitzunge (14) ein Einführschlitz ausgebildet ist.

## Claims

1. Device for joining pipe ends which are formed with axially projecting connecting flanges (17, 18), comprising a first wing (1) and comprising a second wing (2), which are connected to one another via a connecting web (8) and are formed for gripping around the connecting flanges (17, 18) in an engagement region, and comprising a spring arm (12) which is mounted on one wing (1, 2) and exerts an axial force on the connecting flanges (17, 18) when gripping around, a tool engagement arrangement being formed on the spring arm (12), which tool engagement arrangement can be made to engage a tool for axial movement of the spring arm (12) against the axial force in a direction away from the engagement region, **characterized in that** the tool engagement arrangement has a coupling tongue (13) oriented at right angles to the spring arm (12) and projecting in the axial direction over the spring arm (12).

2. Device according to Claim 1, **characterized in that** the spring arm (12) is arranged adjacent to the connecting web (8).

3. Device according to Claim 2, **characterized in that** the spring arm (12) is connected to a wing (1, 2).

4. Device according to Claim 3, **characterized in that** the spring arm (12) extends in the direction of the further wing (1, 2).

5. Device according to any of Claims 1 to 4, **characterized in that** a slide tongue (14) projecting outwards relative to the spring arm (12) in the radial direction and inclined inwards in the axial direction is present on a free end of the spring arm (12).

6. Device according to any of Claims 1 to 5, **characterized in that** the coupling tongue (13) projects radially at right angles over the spring arm (12).

7. Device according to Claim 5 and Claim 6, **characterized in that** an insertion slot is formed between the coupling tongue (13) and the slide tongue (14).

## Revendications

1. Dispositif d'assemblage d'extrémités d'éléments tubulaires, qui sont munies de brides de raccordement (17, 18) faisant saillie dans le plan axial, comprenant une première ailette (1) et comprenant une deuxième ailette (2), qui sont raccordées ensemble au moyen d'une barrette entretoise de liaison (8) et dont la configuration est étudiée pour leur permettre de cramponner sur leur pourtour les brides de raccordement (17, 18) au niveau d'une portion de mise en prise d'engagement, et comprenant une patte élastique (12) disposée attenant à une ailette (1, 2) qui, lors de la mise en prise de cramponnement circonférentiel exerce une force axiale sur les brides de raccordement (17, 18), la patte élastique (12) comportant en l'occurrence un agencement d'insertion d'outil, qui est destiné à être mis en prise d'encastrement avec un outil pour déplacer la patte élastique (12) dans le plan axial en contrant pour ce faire la force axiale dans la direction orientée vers l'extérieur par rapport à la portion de mise en prise d'engagement, **caractérisé en ce que** l'agencement d'insertion d'outil comporte une languette de guidage (13) orientée perpendiculairement à la patte élastique (12), qui fait saillie dans le plan axial au-dessus de la patte élastique (12).

2. Dispositif selon la revendication 1, **caractérisé en ce que** la patte élastique (12) est disposée à proximité de la barrette entretoise de liaison (8).

3. Dispositif selon la revendication 2, **caractérisé en ce que** la patte élastique (12) est raccordée à une ailette (1, 2).

4. Dispositif selon la revendication 3, **caractérisé en ce que** la patte élastique (12) s'étend dans la direction de l'autre ailette (1, 2).

5. Dispositif selon l'une des revendications 1 à 4, **caractérisé en ce que** la patte élastique (12) est munie, au niveau de son extrémité libre, d'une languette de glissement (14) qui par rapport à la patte élastique (12) fait saillie vers l'extérieur dans le plan radial et qui est inclinée vers l'intérieur dans le plan axial.

6. Dispositif selon l'une des revendications 1 à 5, **caractérisé en ce que** la languette de guidage (13) fait saillie selon une disposition en angle droit au-dessus de la patte élastique (12).

7. Dispositif selon la revendication 5 et la revendication 6, **caractérisé en ce qu'**une fente d'introduction est ménagée entre la languette de guidage (13) et la languette de glissement (14).
